# EUROPEAN PATENT SPECIFICATION

(11) **EP 2 507 654 B1**
(45) Date of publication and mention of the grant of the patent: **28.09.2022**
(21) Application number: 10834915.0
(22) Date of filing: 04.11.2010
(51) Int. Cl.: G01V 1/37

(54) **EXTRACTION OF DISCRETE RECORDS FROM CONTINUOUS SEISMIC RECORDINGS**
EXTRAKTION DISKRETER DATENSÄTZE AUS KONTINUIERLICHEN SEISMISCHEN AUFZEICHNUNGEN
EXTRACTION D'ENREGISTREMENTS DISCRETS D'ENREGISTREMENTS SISMIQUES CONTINUS

(30) Priority: 02.12.2009 US 265974 P; 04.11.2010 US 939320
(43) Date of publication of application: 10.10.2012
(73) Proprietor: ConocoPhillips Company, Houston, Texas 77079 (US)
(72) Inventor: EICK, Peter M., Houston Texas 77094 (US); BREWER, Joel D., Houston Texas 77094 (US); CHIU, Stephen K., Katy Texas 77450 (US)
(74) Representative: Simpson, Paul Christopher
(86) International application number: PCT/US2010/055458
(87) International publication number: WO 2011/068620

(56) References cited:
- WO-A2-2004/034088
- GB-A- 2 348 003
- US-A- 4 715 020
- US-A- 5 410 517
- US-A1- 2004 111 217
- US-A1- 2004 215 396
- US-A1- 2004 215 396
- US-A1- 2006 164 916
- US-A1- 2006 164 916
- US-B2- 7 050 356

## Description

### FIELD OF THE DISCLOSURE

The present disclosure generally relates to methods and apparatus for separation of recorded data from continuous records without acquiring listen time between sweeps. This solves a fundamental listen time problem with continuous sweeping sources allowing a single vibrator or single set of seismic sources to transmit without stopping the sources between each seismic sweep.

### BACKGROUND OF THE DISCLOSURE

Seismic surveys image or map the subsurface of the earth by imparting acoustic energy into the ground and recording the reflected energy or "echoes" that return from the rock layers below. The source of the acoustic energy can be generated by explosions, air guns vibrators, and the like. The energy source is positioned on or near the surface of the earth. Each time the energy source is activated it generates a seismic signal that travels into the earth, is partially reflected, and, upon its return, may be detected at many locations on the surface as a function of travel time. The sensors commonly used to detect the returning seismic energy include geophones, accelerometers, and hydrophones. The returning seismic energy is recorded as a continuous signal representing displacement, velocity, acceleration, or other recorded variation as a function of time. Multiple combinations of energy source and sensor can be subsequently combined to create a near continuous image of the subsurface that lies beneath the survey area. One or more sets of seismic signals may be assembled in the final seismic survey.

Technology continues to increase resolution and complexity of seismic systems. One advance, vibroseis, is a method used to propagate energy signals into the earth over an extended period of time as opposed to the near instantaneous energy provided by impulsive sources. The data recorded through vibroseis must convert the extended source signal into an impulse either by a cross-correlation or inversion process. The source signal using this method was originally generated by a servo-controlled hydraulic vibrator or shaker unit mounted on a mobile base unit, but electro-mechanical versions have also been developed. Signals transmitted through the earth are reflected and analyzed to identify changes in signal. The exact distance the vibrations travel before being reflected are unknown and the transmission rates of the vibrations through different features is unknown, thus the time from transmission of the signal to recording of the seismic signal is the only direct measure of distance. Unfortunately, to solve for distance and speed of travel, the origin time and listening time must be known. The need for a period of "listening" time as well as a precise start time for synchronized or coordinated sources has created a very cumbersome system for multiple source vibratory surveys. A variety of solutions have been developed in an attempt to increase the number and quality of recorded signals while reducing the complexity of the seismic surveys.

US4715020 describes a method of separating overlapping surveys by using source signals of known phase difference.

Krohn and Johnson, US20060164916, reduce listening time while simultaneously operating multiple seismic vibrators with continuous sweeps. Separate seismic responses for each vibrator with the earth signature removed are recovered by giving each vibrator a unique, continuous pilot signal. The earth response to the motion of each vibrator is estimated from the pilot signal and removed. In US5410517, Andersen links seismic vibrator sweeps from a cascaded sweep sequence. The initial phase angle of each sweep segment within the sweep sequence is progressively rotated by a constant phase increment of about 360/N degrees, and linked end-to-end. An additional sweep segment linked to the N consecutive sweep segments is positioned and phased so as to substantially suppress harmonic ghosts during correlation. BP Exploration Operation, WO2008025986, operates each vibroseis source independently in terms of both geographic position (VP) and time of emission for each distinctive acoustic signal. No synchronization in time or space is required because each signal is separated by either time, distance or both time and distance. The movement and signal emission time of the vibroseis sources are random. Cross-contamination between the different reflected acoustic signals associated with the different distinctive acoustic signals emitted by the vibroseis sources will appear random from one VP to the next in certain space-time domains and so signals received as a result of the other vibroseis sources appear as random noise. Standard seismic filters minimize non-correlated signals the same way random noise is removed from correlated data.

Previous seismic techniques are limited because they cannot separate continuous overlapping sweeps. These methods require precise timing like Sallas, et al. (US5721710 and US5719821) to directly measure the background and synchronize each sweep. The cascaded sweep method employs long continuous data recording with phase rotation to correlate each vibroseis source signal with its reflected acoustic signal, it still cannot record and identify individual sweeps generated during a series of independent, partially overlapping sweeps.

Other techniques have been developed that utilize a continuous wave seismic signal (Menzies, 1996) for surface analysis under rivers and lakes , but when using Rayleigh waves the signals are limited in depth (5-20 M) and frequency. Single sources with a linear array of receivers, usually 1-4, are used to image weathering and bedrock. By adjusting the "continuous" seismic signal the wavelength of the reflected signal is changed and different depths of the geological formation are imaged. This however does not provide methods of using multiple seismic sources with multiple seismic receivers to visualize large areas of a formation in a continuous and simultaneous manner. Various filters have been applied to seismic data to remove specific noise and artifacts found with ground roll, interference, and other forms of signal distortion. Filtering methods include eigenimage filters (Chiu, 2008). Unfortunately these methods are designed to attenuate various noise and artifacts on inverted data, but generally they are not effective in attenuating noise on data before inversion or cross correlation.

A system is required that can measure multiple signals during a continuous seismic sweep without stopping to measure listening time, remove interfering noise, or synchronize multiple sweeps. This will allow several sweeps to be taken continuously during overlapping time periods. It will provide a method of correcting and measuring seismic signals without wasting time and resources between measurements. Correcting this fundamental problem with continuous recording, separation of the sweeps and the listen time from continuous record, allows each vibrator to operate optimally to transmit a maximum number of signals during a given survey period.

### BRIEF DESCRIPTION OF THE DISCLOSURE

The present invention provides a method for imaging subterranean formations according to claim 1.

The present invention discloses the use of overlapping sweeps from low to high frequency, or inversely from high to low, while using a selective signal separation toward the end of the first sweep to eliminate overlapping frequency interference from the start of the subsequent sweep. Meanwhile, the subsequent sweep uses selective signal separation to eliminate high frequency interference from the previous sweep at the beginning of the sweep and low frequency interference at the end of the sweep. Thus, the data from overlapping sweeps can be extracted from a continuous data record. This technique can also remove harmonic distortion and other extraneous signals that may be recorded during a seismic sweep. Harmonics cause errors in the correlation of conventional data and distort the signal. If sweep harmonics are measured, they can be removed through the inversion process using signal separation methods. Separation of each sweep and listen time from the continuous record through selective signal separation of the noise allows recovery of a discrete signal record with a listening time signal from a continuous record. Vibratory sources and continuous receiver recordings require no listen time for acquisition of conventional, slip-sweep, ZENSEIS^{™} or other multiple source vibrational surveys. The efficiency of acquisitions are increased over 100 fold, decreasing the time required to obtain seismic data, increasing the amount of seismic data that can be acquired during a given time period, and ultimately dramatically reducing the cost of multiple source vibrational surveys.

GB2348003A discloses a slip-sweep methodology whereby two or more seismic sweeps may be recorded simultaneously.

A method is provided according to the appended claims.

### BRIEF DESCRIPTION OF THE DRAWINGS

The invention may best be understood by reference to the following description taken in conjunction with the accompanying figures.
FIG. 1: Model continuous record with multiple overlapping sweeps (S) from 1 to N.
FIG. 2: Selective signal separation removes interference noise (S') for each individual sweep (S).
FIG. 3: Inversion of each record with selective signal separation separates interference noise (S') from recorded sweep (S) and listening time (L). Analysis of the separated signal provides better

### DETAILED DESCRIPTION OF EMBODIMENTS OF THE INVENTION

The fundamental problem with continuous recording is separation of sweeps with listening time from continuous overlapping records. Separating discrete records from a combination of two or more signals has required several different and unique technological advances. US7295490 method of determining a best seismic vibrator phase-encoding scheme from a suite of models to reduce interference between seismic signals. US Application 11/677,438 distributes vibrators and selects the best grouping for minimal geophysical impact. US Application 11/855,776 attenuates noise before source separation to enhance the signal. US Application 11/933,522 uses different sweeps and phase encoding to conduct multiple surveys at the same time. US Application 61/109,403 uses proper coding and phase timing to continuously record marine data. US Application 61/109,279 uses vibrator encoding allowing vibrators to start independently. US Application 61/112,875 adds independent time break recorded in the data stream with an independent timing mechanism for synchronization thus reducing the amount of coordination and synchronization required. US Application 61/109,329 inverts data beyond the listen time to obtain extended data. Finally, US Application 61/152031 allows source separation in simultaneous-multiple-source-marine acquisition by accounting for the motion of the ship in the inversion process. These improvements along with the embodiments described herein, increase the speed and timing of seismic surveys by allowing multiple surveys or seismic sources to be operated independent of each other but with overlapping start and stop times.

Energy sources or "source" includes ZENSEIS^{™}, vibroseis, seismic vibrators, airguns, plasma shots, dynamite, and other sources known to one of ordinary skill in the art. Seismic vibrators include trucks, tractors, trailers, boats or ships, submarines, subterranean, or other sources that have a base plate that can be brought into contact with the earth or water. A reaction mass is vibrated at varying frequencies against the baseplate to produce vibratory motion (transmitting vibration energy) which travels downward into the earth via the base plate. A survey may be designed that uses multiple energy sources, each being activated simultaneously so that the recording instruments capture a composite signal with contributions from multiple vibrators. The composite signal forms a record that may be either intentionally composite or separable through data inversion. A variety of programs are available to generate differing source patterns controlled in space, time, and frequency.

Receivers include geophones, hydrophones, accelerometers, electrodynamic receivers, and the like. Receivers may receive one or more than one type of data including vibrational data, acceleration data, location, temperature, time, date, and the like. Vibrational data may be measured between about 1 Hz to 2 KHz, including data from 6 to 80 Hz, about 20 to 40 Hz, or simply all data less than 160 Hz, and combinations thereof. Receivers may include a recorder or transmit data to a remote recorder. An autonomous recorder includes receiver/recorder combinations that automatically record data from the receiver including systems that record data at the receiver and those that record data at a remote location. In one embodiment, data is stored in a temporary drive at the autonomous recorder until it is transferred either physically or wirelessly to a central recorder for data analysis.

A central data collection unit or recorder is a station designed to receive and record data from one or more autonomous recorders. In the past, central recorders received all of the cables and often powered the seismic recording system. With the current system, a central recorder can receive signals from thousands of autonomous recorders after the data is recorded or during the data collection phase. The data is then stored on a data storage medium. The data storage medium may be magnetic media like recording tapes or floppy discs, one or more computer hard drives, digital media like a CD or DVD, and the like.

A data collection unit or recorder is a device that can sample and store the measured outputs of geophones, accelerometers, timers, GPS units, and the like. An autonomous recorder is a data collection unit that works independently of other units and is not under control via radio telemetry or similar technologies during the course of a seismic survey.

The use of overlapping sweeps from low to high frequency, with selective signal separation during the overlap of the first sweep and subsequent sweep eliminates low frequency interference from the end of the first sweep. Meanwhile, the subsequent sweep uses an adaptive inversion to eliminate high frequency interference from the previous sweep and low frequency interference from the next sweep. Each subsequent overlapping sweep can remove interfering noise by selectively separating the previous and subsequent overlapping signals. Thus, data from overlapping sweeps can be extracted from a continuous data record containing multiple independent sweeps with overlapping start and stop times.

The following examples of certain embodiments of the invention are given. Each example is provided by way of explanation of the invention, one of many embodiments of the invention, and the following examples should not be read to limit, or define, the scope of the invention.

### EXAMPLE 1: SELECTIVE SIGNAL SEPARATION

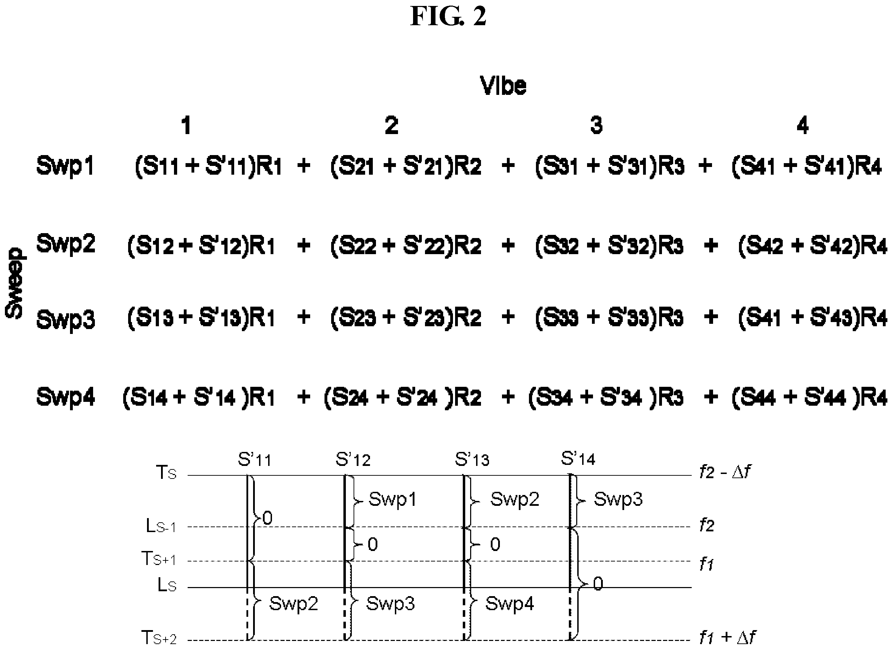

In one embodiment, signals are separated for each source point at the time of discrete record extraction. As shown in FIG 2, for each sweep there is a signal separation function (S') that removes interfering signal noise originating from the previous sweep data and subsequent sweep data. Any given sweep will have a start time (Ts) and an end time (Ts+i) at which point listening time begins. The listening time terminates at any time if the previous and subsequent sweep signals are removed through selective signal separation. For any record the beginning overlap and end overlap can be removed by using inversion to estimate reflectivity (R*ᵢ*) for the desired data and the overlapping sweeps at a given frequency.

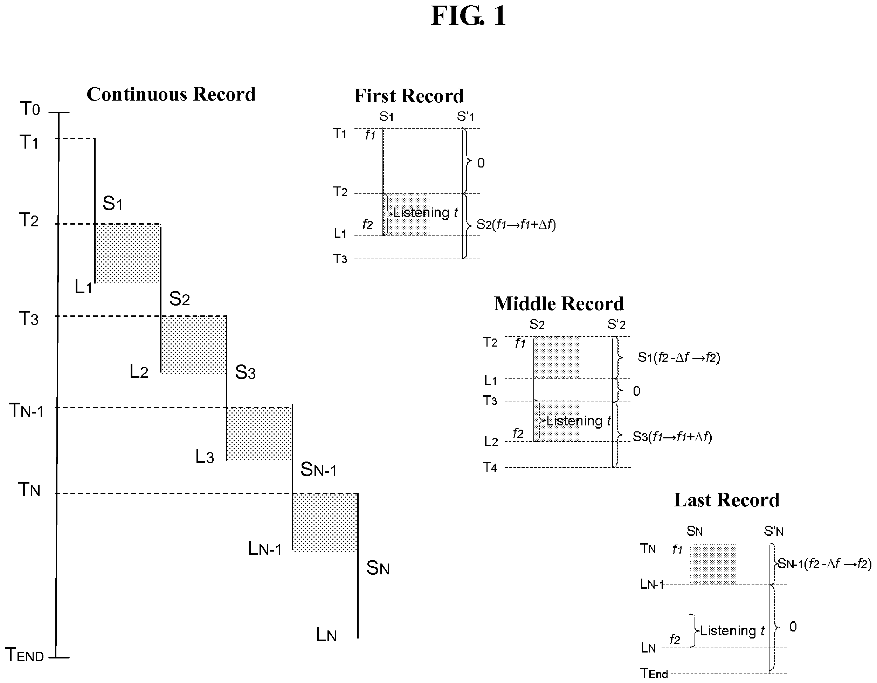

In one example using a high to low sweep, the overlap at the beginning of the record and the end of the record interfere with the desired signal (FIG. 1). By providing an appropriate timeline for when interfering signals were present, the interfering frequencies can be identified. Inversion of the dataset with the original signal (Si) and the interfering signal (S'₁) allows separation of the interfering signal from the reflected signal. Because there is no interfering signal when the data doesn't overlap (0), the interfering signal (S'₁) is the overlapping signal (S₂) by the frequency range of the overlap (*f₁* through *f₁*+Δ*f*). For the second and subsequent signals the interfering signal (S'_{N}) is equivalent to S_{N-1}(*f₂* - Δ*f* through *f₂*) and S_{N+1} (*f₁* through *f₁*+Δ*f*). If the survey is managed and sweep start and stop times are precisely controlled, Δ*f* may be the same for each and every sweep overlap. However, if the sweep start times aren't precisely controlled, the recorded start and stop times can be used to calculate Δ*f* for each sweep overlap. The previous overlap and subsequent overlap may be completely different lengths of time, just as the listening time (t) may also be different lengths of time. The final sweep may only have overlapping signals at the beginning of the sweep. The interfering signal on the last record would be (S'_{N}) equivalent to S_{N-1}(*f₂* - Δ*f* through *f₂*). If another survey were begun independent of the current survey, any overlapping signal could be identified and removed as well using this same method where (S'x) is the interfering signal and Sx (*f₁* through *f₁*+Δ*f*) is the frequencies where Sx overlaps with S_{N}.

Once the interfering vibratory signal is identified (S') it is incorporated into the inversion and removed directly from the data. Thus the clean signal (S) identified in the inversion is retrieved independently without interfering signals. Iterations identifying and refining the interfering signals may be used to further improve signal separation by removing interfering signal noise, harmonics, and other signals that might not be readily identified in the first inversion. Once all of the extraneous noise has been identified it can be removed from the primary signal. By removing interfering signals, two or more overlapping sweeps may be run and the original signals extracted. This speeds data acquisition and provides signal separation that can remove most of the interfering signals.

Signal separation can cover any length of frequencies, (*f₁* → *f₁*+Δ*f*) or (*f₂* - Δ*f* → *f2)* may be independently defined and cover any range of frequencies required to completely remove overlapping signals at the beginning or end of the sweep. This adaptive inversion can be applied to all sweeps independently or at the appropriate intervals to produce a clean primary signal.

### EXAMPLE 2: SINGLE CONTINUOUS RECORD

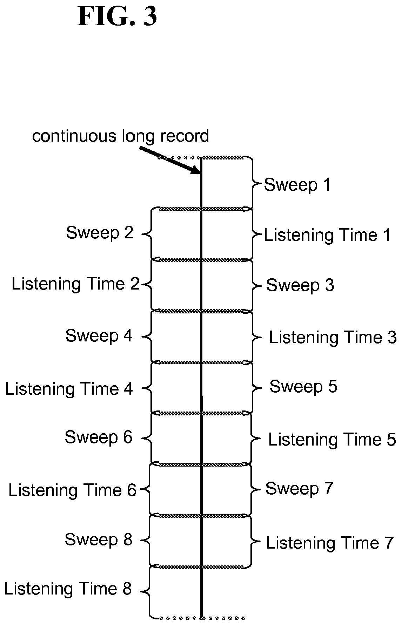

Using selective signal separation, a single continuous record can be generated where one seismic source, including one or more seismic signal generators, is to operate continuously without listening time. As shown in FIG. 3, the sweep signal is initiated at the green bar and completed at the red bar. Traditional sweep methods would require a substantial listening time after the signal is generated. This provides a listening time that can, in certain circumstances, be up to the same length as the sweep time. Selective signal separation allows removal of the interfering signal, in the case of sweep 1, the beginning of sweep 2 would be the interfering signal. Thus a seismic survey that requires 4, 5, 6, 7, 8, 9, 10 repeats or more to obtain sufficient resolution would require repeated sweeps followed by a significant listening time. With this method of adaptive inversion, sweep 1, sweep 2, sweep 3, sweep 4, sweep 5, sweep 6, sweep 7, sweep 8, and any number of additional sweeps, are obtained without listening time. Selective signal separation allows removal of the interfering signals, leaving only the desired signal with sufficient listening time. Sweep 2 is selectively removed from sweep 1, sweeps 1 and 3 are selectively removed from sweep 2, sweeps 2 and 4 are selectively removed from sweep 3, sweeps 3 and 5 are selectively removed from sweep 4, sweeps 4 and 6 are selectively removed from sweep 5, sweeps 5 and 7 are selectively removed from sweep 6, sweeps 6 and 8 are selectively removed from sweep 7, and sweep 7 is selectively removed from sweep 8. In this way, one or more seismic sources can be active continuously without waiting for a listening time. The ability to transmit seismic data continuously reduces downtime for the vibrators saving time and money while allowing collection of increasing numbers of datasets. This may be used to either increase resolution of the subterranean formation image or decrease the cost of seismic data collection, or both.

Although the systems and processes described herein have been described in detail, it should be understood that various changes, substitutions, and alterations can be made without departing from the scope of the invention as defined by the following claims. Each and every claim is incorporated into the specification as an embodiment of the present invention. Thus, the claims are part of the description and should be deemed to be additional description to the embodiments of the present invention.

### REFERENCES

All of the references cited herein are listed again here for convenience:
1. USSN 11/855,776 filed September 14, 2007, Olson, et al., "Method and Apparatus for Pre-Inversion Noise Attenuation of Seismic Data."
2. USSN 11/933,522 filed November 1, 2007, Chiu, et al., "Method and Apparatus for Minimizing Interference Between Seismic Systems."
3. USSN 12/167,683 filed July 3, 2008, Brewer, et al., "Marine Seismic Acquisition with Controlled Streamer Flaring."
4. USSN 12/604,841 filed October 23, 2009, Eick, et al., "Variable Timing ZENSEIS^{™}."
5. USSN 12/606,867 filed October 27, 2009, Chiu, et al., "Simultaneous Multiple Source Extended Inversion."
6. USSN 12/604,243 filed October 22, 2009, Eick, et al., "Marine Seismic Acquisition."
7. USSN 12/613,704 filed November 6, 2009, Brewer, et al., "4D Seismic Signal Analysis."
8. USSN 12/607,525 filed October 28, 2009, Eick and Brewer, "Practical Autonomous Seismic Recorder Implementation and Use."
9. USSN 61/121,976 filed December 12, 2008, Cramer et al., "Controlled Source Fracture Monitoring."
10. US5410517, "Method for Cascading Sweeps for a Seismic Vibrator," Anderson, Exxon Prod. Res. Co. (1995).
11. US5719821, "Method and apparatus for source separation of seismic vibratory signals," Sallas and Corrigan, Atlantic Richfield Co., (1998).
12. US5721710, "High fidelity vibratory source seismic method with source separation," Sallas, et al., Atlantic Richfield Co. (1998)
13. US2006164916, "Method for Continuous Sweeping and Separation of Multiple Seismic Vibrators," Krohn & Johnson, ExxonMobil (2006).
14. WO2008025986, "Seismic Survey Method," Howe, BP Exploration Operating (2008).
15. Chiu and Howell, "Attenuation of coherent noise using localized-adaptive eigenimage filter," SEG Las Vegas 2008 Annual Meeting (2008)
16. Menzies and Matthews, "The Continuous Surface-Wave System: A Modern Technique for Site Investigation" Special Lecture: Indian Geotechnical Conference, Madras, December 11-14th 1996.

## Claims

1. A method for imaging subterranean formations comprising:
a) recording two or more overlapping independent seismic surveys in a continuous seismic record,
b) obtaining a single seismic survey with listening time from the continuous seismic record by selective signal separation of one or more overlapping independent surveys from the continuous seismic record, and
c) assembling a composite image of the subterranean formation from multiple independent single seismic surveys,
wherein overlapping seismic surveys are removed from the continuous seismic record by selective signal separation (S'), comprising elements of overlapping frequencies (*f₁* → *f₁*+Δ*f*), (*f₂* - Δ*f* → *f₂*), or both (*f₁* → *f₁*+Δ*f*) and (*f₂* - Δ*f* → *f₂*), wherein selective signal separation involves beginning and end overlap being removed by using inversion to estimate reflectivity for desired data and the overlapping sweeps at a given frequency.

2. The method of claim 1, wherein said continuous seismic record comprises multiple overlapping seismic surveys each comprising multiple seismic sources.

3. The method of claim 1, wherein said composite image of the subterranean formation is a 2-dimensional slice, 3-dimensional image, or 4-dimensional image of a subterranean formation.

4. The method of claim 1,
wherein the continuous seismic record comprises multiple overlapping seismic surveys each comprising multiple seismic sources, wherein said selective signal separation (S') is of overlapping frequencies (*f₁* → *f₁*+Δ*f*), (*f₂* - Δ*f* → *f₂*), or both (*f₁* → *f₁*+Δ*f*) and (*f₂* - Δ*f* → *f₂*), wherein the composite image of the subterranean formation is a 2-dimensional slice, 3-dimensional image, or 4-dimensional image of a subterranean formation.

## Patentansprüche

1. Verfahren zur Abbildung unterirdischer Formationen, umfassend:
a) Aufzeichnen zweier oder mehrerer sich überschneidender unabhängiger seismischer Untersuchungen in einer kontinuierlichen seismischen Aufzeichnung,
b) Erhalten einer einzigen seismischen Untersuchung mit Wiedergabezeit aus der kontinuierlichen seismischen Aufzeichnung durch selektive Signaltrennung von einer oder mehreren sich überschneidenden unabhängigen Untersuchungen aus der kontinuierlichen seismischen Aufzeichnung, und
c) Zusammensetzen eines Verbundbildes der unterirdischen Formation aus mehreren unabhängigen einzelnen seismischen Untersuchungen,
wobei sich überschneidende seismische Untersuchungen durch selektive Signaltrennung (S'), umfassend Elemente von sich überschneidenden Frequenzen (*f₁* → *f₁ + Δf*), (*f₂- Δf*→*f₂*), oder beide (*f₁* → *f₁* + *Δf*) und (*f₂* - *Δf* → *f₂*) aus der kontinuierlichen seismischen Aufzeichnung entfernt werden, wobei selektive Signaltrennung anfängliche und abschließende Überschneidung einbezieht, die durch Verwenden einer Umkehr entfernt wird, um die Reflektivität für gewünschte Daten und die Durchläufe der Überschneidung auf einer gegebenen Frequenz zu schätzen.

2. Verfahren nach Anspruch 1, wobei die kontinuierliche seismische Aufzeichnung mehrere sich überschneidende seismische Untersuchungen umfasst, von denen jede mehrere seismische Quellen umfasst.

3. Verfahren nach Anspruch 1, wobei das Verbundbild der unterirdischen Formation ein 2-dimensionales Slice, 3-dimensionales Bild, oder 4-dimensionales Bild einer unterirdischen Formation ist.

4. Verfahren nach Anspruch 1,
wobei die kontinuierliche seismische Aufzeichnung mehrere sich überschneidende seismische Untersuchungen umfasst, von denen jede mehrere seismische Quellen umfasst, wobei die selektive Signaltrennung (S') von sich überschneidenden Frequenzen (*f₁* → *f₁* + *Δf*), (*f₂- Δf*→*f₂*), oder beide (*f₁* → *f₁* + *Δf*) ist, und (*f₂- Δf*→*f₂*), wobei das Verbundbild der unterirdischen Formation ein 2- dimensionales Slice, 3-dimensionales Bild, oder 4-dimensionales Bild einer unterirdischen Formation ist.

## Revendications

1. Procédé d'imagerie de formations souterraines comprenant les étapes consistant à :
a) enregistrer deux ou plus de deux relevés sismiques indépendants se chevauchant dans un enregistrement sismique continu,
b) obtenir un relevé sismique unique avec un temps d'écoute à partir de l'enregistrement sismique continu par la séparation sélective de signaux d'un ou de plusieurs relevés indépendants se chevauchant à partir de l'enregistrement sismique continu, et
c) assembler une image composite de la formation souterraine à partir de multiples relevés sismiques uniques indépendants,
dans lequel des relevés sismiques se chevauchant sont supprimés de l'enregistrement sismique continu par une séparation sélective de signaux (S'), comprenant des éléments de fréquences se chevauchant (*f₁* → *f₁* + *Δf*), (*f₂- Δf*→*f₂*), ou à la fois *(f₁* → *f₁* + *Δf*) et (*f₂ - Δf* → *f₂*), dans lequel la séparation sélective de signaux implique la suppression du chevauchement de début et de fin en utilisant une inversion pour estimer une réflectivité pour des données souhaitées et les balayages qui se chevauchent à une fréquence donnée.

2. Procédé selon la revendication 1, dans lequel ledit enregistrement sismique continu comprend de multiples relevés sismiques se chevauchant comprenant chacun de multiples sources sismiques.

3. Procédé selon la revendication 1, dans lequel ladite image composite de la formation souterraine est une tranche en 2 dimensions, une image en 3 dimensions, ou une image en 4 dimensions d'une formation souterraine.

4. Procédé selon la revendication 1,
dans lequel ledit enregistrement sismique continu comprend de multiples relevés sismiques se chevauchant comprenant chacun de multiples sources sismiques, dans lequel ladite séparation sélective de signaux (S') est de fréquences qui se chevauchent (*f₁* → *f₁* + *Δf*), (*f₂- Δf*→*f₂*), ou à la fois (*f₁* → *f₁* + *Δf*), et (*f₂- Δf*→*f₂*), dans lequel l'image composite de la formation souterraine est une tranche en 2 dimensions, une image en 3 dimensions, ou une image en 4 dimensions d'une formation souterraine.
